# EUROPÄISCHE PATENTSCHRIFT

(11) **EP 2 574 807 B1**
(45) Veröffentlichungstag und Bekanntmachung des Hinweises auf die Patenterteilung: **12.11.2014**
(21) Anmeldenummer: 11007966.2
(22) Anmeldetag: 30.09.2011
(51) Int. Cl.: F16D 1/068, F16H 57/00

(54) **Verbindung zwischen einer Welle und einem Nabenbauteil sowie Verfahren zum Herstellen der Verbindung**
Connection between a shaft and a collar component and method for producing the connection
Raccordement entre un arbre et un composant de moyeu ainsi que procédé de fabrication du raccordement

(43) Veröffentlichungstag der Anmeldung: 03.04.2013
(73) Patentinhaber: Maxon Motor AG, 6072 Sachseln (CH)
(72) Erfinder: Buurlage, Thorsten, 69517 Gorxheimertal (DE); Reith, Michael, 79541 Lörrach (DE)
(74) Vertreter: Grünecker, Kinkeldey, Stockmair & Schwanhäusser

(56) Entgegenhaltungen:
- EP-A1- 0 038 072
- DE-A1- 19 932 939
- DE-C1- 3 345 219
- US-A- 4 679 960

## Beschreibung

Die vorliegende Erfindung betrifft ein Verfahren zum Verbinden eines Nabenbauteils, insbesondere eines Ritzels, mit einer Welle nach dem Oberbegriff des unabhängigen Anspruchs 1 sowie eine Verbindung zwischen einer Welle und einem Nabenbauteil. Ferner betrifft die vorliegende Erfindung einen Elektrokleinantrieb mit einer Welle und einem mit der Welle verbundenen Ritzel.

Aus dem Stand der Technik sind verschiedene Verfahren bekannt, um ein separat gefertigtes Nabenbauteil, beispielsweise ein Zahnrad, Ritzel oder dergleichen, mit einer Welle zu verbinden. Insbesondere im Elektromotorenbau ist es in vielen Fällen nicht möglich bzw. nicht zweckmäßig, das Ritzel der Motorwelle, welches beispielsweise zum Antrieb eines Getriebes erforderlich ist, in einem Stück mit der Welle zu verbinden. So können Ritzel beispielsweise aus Montagegründen in einigen Fällen erst nach Fertigstellung der kompletten Elektromotorbaugruppe mit der aus dem Elektromotorgehäuse hervorstehenden Motorwelle verbunden werden. Auch werden Elektromotoren oft ohne Ritzel vorgefertigt und je nach Kundenwunsch mit unterschiedlichen Ritzeln bestückt. Ritzel oder auch andere Nabenbauteile werden daher üblicherweise mit einer Nabenbohrung gefertigt, zur Montage auf die Motorwelle aufgesteckt und über einen Presssitz oder andere Fügeverfahren mit der Welle verbunden.

Die separate Fertigung und nachträgliche Verbindung des Ritzels bzw. Nabenbauteils mit der Welle kann auch dann angesagt sein, wenn Nabenbauteil und Welle unterschiedlichen Anforderungen genügen müssen und daher zweckmäßigerweise aus unterschiedlichen Materialien gefertigt werden.

Ein Verfahren zum Verbinden eines Nabenbauteils ist beispielsweise aus DE 19964105 C1 bekannt. Nabe und Welle können aus unterschiedlichen Werkstoffen bestehen, nämlich Stahl und Keramik, und werden unter Verwendung einer Presshülse miteinander verbunden. Die Presshülse ist zwischen Welle und Nabe angeordnet, so dass jeweils zwischen Welle und Presshülse bzw. Presshülse und Nabe ein Presssitz besteht. Für eine sichere Verbindung sind sowohl der mit der Welle in Kontakt stehende Innenmantel, als auch der mit der Nabe in Kontakt tretende Außenmantel der Presshülse mit einer reibwerterhöhenden Beschichtung versehen.

Nachteilig an der aus DE 19964105 C1 bekannten Verbindung ist, dass ein Presssitz selbst unter Verwendung einer Presshülse mit reibwerterhöhender Beschichtung keine absolut sichere Verbindung zwischen Welle und Nabe erzeugen kann. Hohe Kräfte, die in Umfangsrichtung auf Welle bzw. Nabe einwirken, können somit zu einer Verdrehung der Nabe bzw. des Ritzels gegenüber der Welle führen. Zudem ist das gesamte Verfahren, insbesondere die Beschichtung der Presshülse mit reibwerterhöhenden Stoffen, aufwendig und teuer. Sofern ein keramisches Ritzel mit einer Welle aus Metall verbunden werden soll, führt die Verwendung eines Presssitzes bei Elektrokleinmotoren und Elektrokleinstmotoren rasch an die Grenze der übertragbaren Kräfte, da die verwendeten Bauteile, insbesondere das keramische Ritzel, zum Teil äußerst filigran ausgeführt sind und somit die Gefahr besteht, dass das Ritzel beim Herstellen der Pressverbindung gesprengt wird.

Aus der DE 3711489 A1 ist eine Anordnung zur Befestigung einer metallischen Nabe auf einer aus einem keramischen Werkstoff bestehenden Welle bekannt. Auch hier ist zwischen Welle und Nabe eine Hülse angeordnet, die jeweils mit Welle bzw. Nabe verbunden ist. Die Hülse ist mit der keramischen Welle verlötet, zwischen Nabe und Hülse hingegen besteht ein Axialspannsitz. Die Hülse ist daher relativ aufwendig gestaltet, und umfasst einen axialen Anschlag für das Nabenbauteil sowie ein Gewinde, in das eine Spannschraube zum Festspannen des Nabenbauteiles eingeschraubt werden kann. Anstelle des Axialpresssitzes kann zwischen Nabe und Hülse auch ein Formschluss bestehen.

Der in DE 3711489 A1 beschriebene Spann- bzw. Presssitz bringt die bereits zuvor beschriebenen Nachteile mit sich. Zur Herstellung eines Formschlusses muss die Geometrie von Hülse und Nabenbauteil aufwendig gestaltet werden.

Ein gattungsgemäßes Verfahren ist aus US 4,679,960 A bekannt. Bei diesem Verfahren wird ein Verbindungselement aus Metall zunächst mit einem Konus einer Keramikwelle verlötet. Anschließend erfolgt bei niedriger Temperatur die Verlötung des Verbindungselements mit einer Stahlwelle.

Aufgabe der vorliegenden Erfindung ist es, das Verfahren der gattungsbildenden Art derart weiter zu bilden, dass eine sichere Verbindung zwischen Ritzel bzw. Nabenbauteil und Welle gewährleistet wird, wobei das Verfahren zudem günstig und einfach durchführbar sein soll.

Die Aufgabe wird gelöst durch die Merkmale des unabhängigen Anspruchs 1. Demnach liegt dann eine erfindungsgemäße Lösung der Aufgabe vor, wenn das aus Metall bestehende Bauteil mit dem Verbindungselement verschweißt wird.

Dadurch wird eine absolut sichere Verbindung zwischen Welle und Nabenbauteil erreicht. Das Verfahren ist zudem sehr günstig und einfach in der Durchführung. Auf spezielle, aufwendige

Geometriegestaltungen für formschlüssige Verbindungen kann verzichtet werden. Das Verfahren eignet sich sowohl zum Verbinden eines keramischen Nabenbauteils, beispielsweise eines Ritzels, mit einer Welle aus Metall, als auch zum Verbinden eines metallischen Nabenbauteils mit einer keramischen Welle.

Besonders schnell, einfach und kostengünstig erfolgt die Verschweißung mittels Laserschweißen. Durch die geringe Wärmeentwicklung, die beim Laserschweißen auftritt, wird ferner verhindert, dass Lotstellen zuvor verlöteter Bauteile durch Schmelzen des Lotes geöffnet werden. Diese Gefahr besteht hingegen bei den meisten anderen Schweißverfahren. Um die Gefahr des Öffnens einer Lotstelle weiter zu reduzieren, ist es von Vorteil, wenn die Verschweißung punktuell erfolgt.

Vorteilhafte Ausgestaltungen des erfindungsgemäßen Verfahrens sind Gegenstand der Unteransprüche.

Eine sehr gute stoffschlüssige Verbindung zwischen dem Bauteil aus Keramik und dem Verbindungselement aus Metall wird erzielt, wenn das aus Keramik bestehende Bauteil mit dem Verbindungselement verlötet wird. Eine Verlötung ist zudem einfach und reproduzierbar und kann beispielsweise im Lötofen erfolgen.

In einer besonders bevorzugten Ausführungsform der vorliegenden Erfindung wird das Verbindungselement zunächst mit dem Nabenbauteil und anschließend mit der Welle verbunden. Dies hat den Vorteil, dass die fertig gestellte Einheit bestehend aus Nabenbauteil und Verbindungselement vor der endgültigen Verbindung mit der Welle exakt positioniert und insbesondere in Umfangsrichtung ausgerichtet werden kann.

Die Erfindung stellt ferner eine Verbindung zwischen einer Welle und einem Nabenbauteil bereit, wobei die Verbindung nach dem erfindungsgemäßen Verfahren hergestellt ist.

In einer besonders bevorzugten Ausführungsform der vorliegenden Erfindung handelt es sich bei dem Verbindungselement zwischen Welle und Nabenbauteil um eine radial zwischen Welle und Nabenbauteil angeordnete Hülse. Eine derartige Hülse garantiert eine optimale Verbindung zwischen Welle und Nabenbauteil. Die Hülse kann einfach auf die Welle aufgesteckt bzw. in eine Nabenbohrung des Nabenbauteils eingesteckt werden.

Ein optimaler Stoffschluss zwischen der Hülse und dem aus Keramik bestehenden Bauteil mittels Verlötung bzw. zwischen Hülse und dem aus Metall bestehenden Bauteil mittels Verschweißung wird erzielt, wenn die Hülse aus Stahl besteht.

In einer besonders bevorzugten Ausführungsform der vorliegenden Erfindung besteht das Nabenbauteil aus Keramik, und die Welle aus Stahl. So können Keramikritzel unter Verwendung herkömmlicher Wellen aus Stahl eingesetzt werden. Keramikritzel bieten gute Gleiteigenschaften, geringeren Verschleiß gegenüber metallischen Ritzeln, höhere Lebensdauer sowie den Vorteil der elektrischen und thermischen Isolation. Für die Verwendung von Keramik spricht ebenfalls die Biokompatibilität dieses Werkstoffs, die bei einigen Anwendungen erforderlich ist.

Als besonders vorteilig hat sich herausgestellt, wenn das Nabenbauteil aus Zirkoniumoxid besteht. Zirkoniumoxid lässt sich besonders gut mit metallischen Werkstoffen verlöten.

Das erfindungsgemäße Verfahren und die erfindungsgemäße Verbindung zwischen Welle und Ritzel eignen sich besonders bei Elektrokleinantrieben. Darunter sind sowohl reine Elektromotoren zu verstehen als auch Antriebseinheiten, bestehend aus Elektrokleinmotor und Getriebe. In letzterem Fall kann die Erfindung sowohl zur Verbindung der Getriebeabtriebswelle mit dem Abtriebsritzel als auch zur Verbindung der Motorwelle mit dem Motorritzel Anwendung finden.

Ein Ausführungsbeispiel der vorliegenden Erfindung wird im Folgenden anhand von Zeichnungen näher erläutert.

Es zeigen:
- Fig. 1: ein keramisches Ritzel in Schrägansicht,
- Fig. 2: einen ersten Verfahrensschrift des erfindungsgemäßen Verfahrens, wobei eine hohlzylindrische Hülse in das keramische Ritzel gemäß Fig. 1 eingesetzt wird,
- Fig. 3: das keramische Ritzel aus den Figuren 1 und 2 mit eingesetzter und bereits verlöteter Stahlhülse,
- Fig. 4: einen weiteren Verfahrensschritt des erfindungsgemäßen Verfahrens, wobei das vorgefertigte Ritzel aus Fig. 3 auf eine Stahlwelle aufgesteckt wird,
- Fig. 5: einen weiteren Verfahrensschritt, wobei die Stahlhülse des vorgefertigten Ritzels mit der Stahlwelle verschweißt wird, und
- Fig. 6: das mit der Stahlwelle fertig verbundene Ritzel.

Für die folgenden Ausführungen gilt, dass gleiche Teile mit gleichen Bezugszeichen bezeichnet sind. Sofern in einer Figur Bezugszeichen enthalten sind, die in der zugehörigen Figurenbeschreibung nicht erläutert werden, so wird auf vorangegangene Figurenbeschreibungen Bezug genommen.

Die vorliegende Erfindung erlaubt die Verbindung eines Ritzels aus Keramik mit einer herkömmlichen Welle aus Stahl. Die Verwendung von Keramikwerkstoffen bei Motorritzeln bietet gute Gleiteigenschaften, geringeren Verschleiß gegenüber metallischen Ritzeln, höhere Lebensdauer, sowie den Vorteil elektrischer und thermischer Isolation. Die Erfindung bietet darüber hinaus den Vorteil einer sicheren Verbindung zwischen Ritzel und Welle.

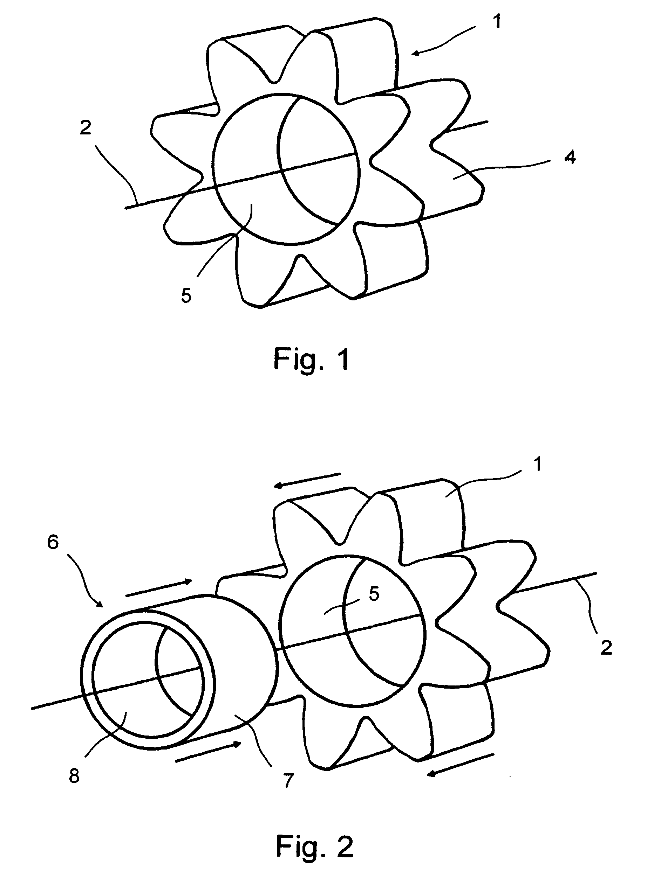

Ein derartiges keramisches Ritzel 1 ist in Fig. 1 abgebildet. Das Ritzel 1 ist in Schrägansicht gezeigt und umfasst einen Zahnkranz 4 sowie eine mittige Bohrung, deren innere Zylindermantelfläche mit dem Bezugszeichen 5 bezeichnet ist. Die Achse des keramischen Ritzels 1 ist ferner mit dem Bezugszeichen 2 bezeichnet.

Um das keramische Ritzel mit einer Welle aus Metall, insbesondere aus Stahl, verbinden zu können, wird in einem ersten Verfahrensschritt des erfindungsgemäßen Verfahrens zunächst eine hohlzylindrische Stahlhülse 6 in die zentrale Bohrung des Ritzels eingesetzt. Dieser Verfahrensschritt ist in Fig. 2 dargestellt. Die hohlzylindrische Hülse 6 weist eine äußere Mantelfläche 7 und eine innere Mantelfläche 8 auf. Der Durchmesser der äußeren Mantelfläche 7 ist derart bemessen, dass die hohlzylindrische Hülse 6 spielbehaftet in die zentrale Bohrung des keramischen Ritzels 1 eingesetzt werden kann. Vorzugsweise entspricht die Länge der hohlzylindrischen Hülse 6 der axialen Länge des keramischen Ritzels 1.

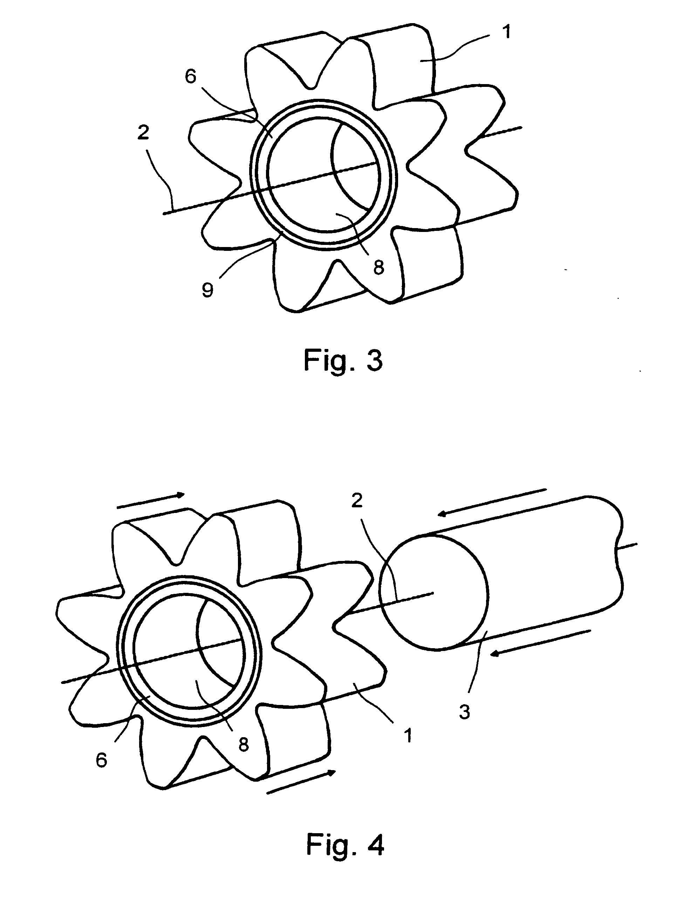

In Fig. 3 ist das keramische Ritzel mit vollständig eingesetzter hohlzylindrischer Stahlhülse 6 abgebildet. Die hohlzylindrische Hülse 6 wird mit dem keramischen Ritzel verlötet, so dass zwischen der äußeren Mantelfläche 7 der hohlzylindrischen Hülse 6 und der inneren Zylindermantelfläche 5 der zentralen Bohrung des keramischen Ritzels 1 eine Verbindungslotschicht 9 entsteht. Die Verlötung der beiden Bauteile kann beispielsweise in einem Ofen vorgenommen werden. Das derart vorgefertigte Ritzel mit eingesetzter und verlöteter Stahlhülse 6 kann nun wie ein herkömmliches Ritzel aus Metall bzw. Stahl auf eine ebenfalls aus Metall bzw. Stahl bestehende Welle 3 aufgesteckt und mit dieser verbunden werden. Der Aufsteckvorgang ist in Fig. 4 dargestellt. Die Vorfertigung des Ritzels durch Einsetzen und Verlöten der hohlzylindrischen Hülse 6 bietet den Vorteil, dass das vorgefertigte Ritzel nun exakt auf der Welle 3 positioniert und ausgerichtet werden kann.

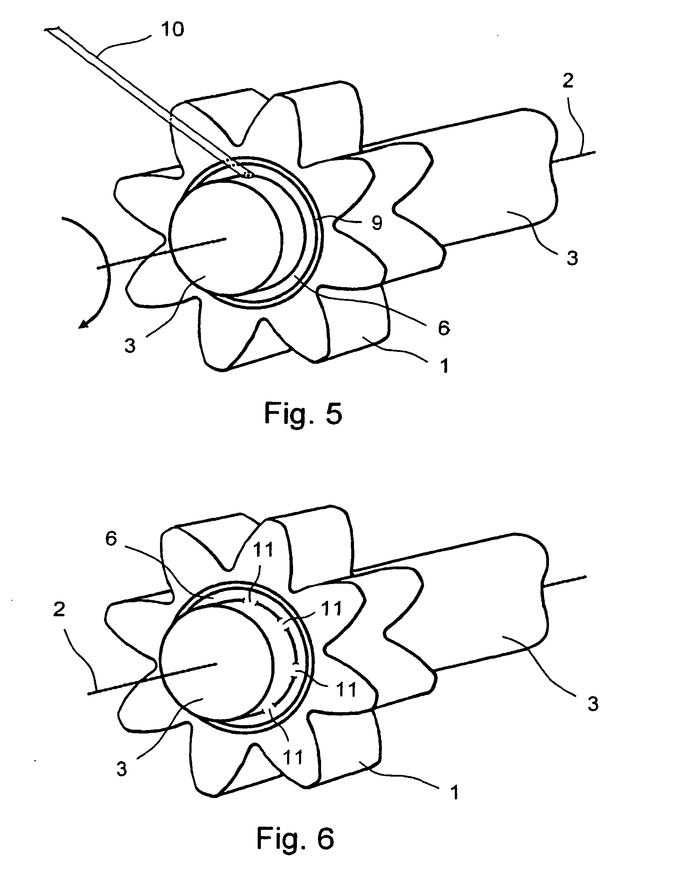

In einem nächsten Verfahrensschritt werden das Ritzel 1 bzw. die mit dem Ritzel verlötete Hülse 6 und die Stahlwelle 3 miteinander verschweißt. Die Verschweißung erfolgt mittels eines Laserschweißverfahrens. Hierzu wird der Laserstrahl 10 des nicht weiter dargestellten Laserschweißgeräts auf die Verbindungsfuge zwischen der zylindrischen Welle 3 und der Stirnfläche der Hülse 6 des Ritzels 1 gerichtet. Die Verschweißung kann punktweise erfolgen, so dass die in Fig. 6 dargestellten, gleichmäßig in Umfangsrichtung verteilten Schweißpunkte 11 entstehen. Alternativ dazu kann mittels des Lasers 10 auch eine durchgängige Schweißnaht in Umfangsrichtung erstellt werden. Je nach Anforderung kann das Ritzel auch auf der nicht dargestellten Rückseite mit der zylindrischen Welle 3 verschweißt werden.

Das Laserschweißverfahren eignet sich ganz besonders zur Verschweißung der hohlzylindrischen Hülse 6 mit der zylindrischen Welle 3, da ein relativ geringer Wärmeeintrag in die Hülse und in weiterer Folge in die Lötstelle 9 zwischen Hülse und Ritzel stattfindet. Im Vergleich zu anderen Schweißverfahren wird durch das Laserschweißverfahren somit gewährleistet, dass sich die Lötstelle 9 zwischen Hülse 6 und Ritzel 1 nicht so weit erhitzt, dass das Lot schmilzt und die Lötstelle durch den Schweißvorgang geöffnet wird. Durch die zuvor beschriebene punktuelle Verschweißung wird die Lötstelle äußerst moderat erwärmt. Der Durchmesser der inneren Mantelfläche 8 der hohlzylindrischen Hülse 6 und der Durchmesser der zylindrischen Welle 3 können so aufeinander abgestimmt sein, dass entweder eine Spielpassung oder eine Presspassung zwischen den beiden Bauteilen besteht. Mit einem Presssitz kann der durch Verschweißung hergestellte Verbund zwischen Ritzel und Welle unterstützt werden. Da dem Presssitz in diesem Fall nur eine unterstützende Wirkung zukommt, kann die Presspassung so ausgelegt werden, dass lediglich geringe Spannungen auftreten, die in keinem Fall zu einer Zerstörung des keramischen Ritzels führen.

Es versteht sich von selbst, dass das Ritzel nicht, wie abgebildet in den Fig. 5 und 6, vollständig auf die Welle 3 aufgeschoben werden muss. Beispielsweise können die Stirnseite der zylindrischen Welle 3 und die vordere Stirnseite des Ritzels plan miteinander abschließen. Ferner wird darauf hingewiesen, dass von der zylindrischen Welle 3 lediglich das vordere Ende dargestellt ist.

Die Erfindung eignet sich ganz besonders zur Verbindung von Ritzel und Motor- bzw. Getriebewelle eines Elektrokleinantriebs.

## Patentansprüche

1. Verfahren zum Verbinden eines Nabenbauteils, insbesondere eines Ritzels (1), mit einer Welle (3), wobei Nabenbauteil und Welle (3) aus unterschiedlichen Materialien, nämlich Keramik und Metall, bestehen, und wobei ein Verbindungselement aus Metall sowohl mit dem Nabenbauteil als auch mit der Welle (3) stoffschlüssig verbunden wird, **dadurch gekennzeichnet, dass** das aus Metall bestehende Bauteil mit dem Verbindungselement verschweißt wird.

2. Verfahren nach Anspruch 1, **dadurch gekennzeichnet, dass** das aus Keramik bestehende Bauteil mit dem Verbindungselement verlötet wird.

3. Verfahren nach Anspruch 1 oder 2, **dadurch gekennzeichnet, dass** die Verschweißung mittels Laserschweißen erfolgt.

4. Verfahren nach einem der Ansprüche 1 bis 3, **dadurch gekennzeichnet, dass** das Verbindungselement zunächst mit dem Nabenbauteil und anschließend mit der Welle (3) verbunden wird.

5. Verbindung zwischen einer Welle und einem Nabenbauteil, hergestellt nach dem Verfahren gemäß einem der Ansprüche 1 bis 4.

6. Verbindung nach Anspruch 5, **dadurch gekennzeichnet, dass** das Verbindungselement eine radial zwischen Welle und Nabenbauteil angeordnete Hülse (6) ist.

7. Verbindung nach Anspruch 6, **dadurch gekennzeichnet, dass** die Hülse (6) aus Stahl besteht.

8. Verbindung nach einem der Ansprüche 5 bis 7, **dadurch gekennzeichnet, dass** das Nabenbauteil aus Keramik, und die Welle (3) aus Stahl besteht.

9. Verbindung nach einem der Ansprüche 5 bis 8, **dadurch gekennzeichnet, dass** das Nabenbauteil aus Zirkoniumoxid besteht.

10. Elektrokleinantrieb mit einer Welle (3) und einem mit der Welle (3) verbundenen Ritzel (1), **gekennzeichnet durch** eine Verbindung zwischen Welle (3) und Ritzel (1) nach einem der Ansprüche 5 bis 9.

## Claims

1. Method for connecting a hub component, in particular a pinion (1), to a shaft (3), wherein the hub component and the shaft (3) consist of different materials, that is of ceramics and metal, and wherein a connecting element of metal is connected both to the hub component and to the shaft (3) by a material bond, **characterized in that** the component consisting of metal is welded to the connecting element.

2. Method according to claim 1, **characterized in that** the component consisting of ceramics is soldered to the connecting element.

3. Method according to claim 1 or 2, **characterized in that** welding is done by means of laser welding.

4. Method according to one of claims 1 to 3, **characterized in that** the connecting element is first connected to the hub component and subsequently to the shaft (3).

5. Connection between a shaft and a hub component, prepared according to the method according to one of claims 1 to 4.

6. Connection according to claim 5, **characterized in that** the connecting element is a sleeve (6) radially disposed between the shaft and the hub component.

7. Connection according to claim 6, **characterized in that** the sleeve (6) consists of steel.

8. Connection according to one of claims 5 to 7, **characterized in that** the hub component consists of ceramics and the shaft (3) consists of steel.

9. Connection according to one of claims 5 to 8, **characterized in that** the hub component consists of zirconium oxide.

10. Electric miniature drive with a shaft (3) and a pinion (1) connected to the shaft (3), **characterized by** a connection between the shaft (3) and the pinion (1) according to one of claims 5 to 9.

## Revendications

1. Procédé pour assembler une pièce formant moyeu, notamment un pignon (1), avec un arbre (3), la pièce formant moyeu et l'arbre (3) étant constitués de matériaux différents, à savoir de la céramique et du métal, et un élément d'assemblage en métal étant relié, par une liaison par continuité de matière, aussi bien à la pièce formant moyeu qu'à l'arbre (3), **caractérisé en ce que** la pièce en métal est soudée à l'élément d'assemblage.

2. Procédé selon la revendication 1, **caractérisé en ce que** la pièce en céramique est liée par brasage à l'élément d'assemblage.

3. Procédé selon la revendication 1 ou la revendication 2, **caractérisé en ce que** le soudage s'effectue par un processus de soudage au laser.

4. Procédé selon l'une des revendications 1 à 3, **caractérisé en ce que** l'élément d'assemblage est tout d'abord relié à la pièce formant moyeu, et ensuite à l'arbre (3).

5. Liaison d'assemblage entre un arbre et une pièce formant moyeu, fabriquée d'après le procédé selon l'une des revendications 1 à 4.

6. Liaison d'assemblage selon la revendication 5, **caractérisée en ce que** l'élément d'assemblage est une douille (6) agencée radialement entre l'arbre et la pièce formant moyeu.

7. Liaison d'assemblage selon la revendication 6, **caractérisée en ce que** la douille (6) est réalisée en acier.

8. Liaison d'assemblage selon l'une des revendications 5 à 7, **caractérisée en ce que** la pièce formant moyeu est en céramique, et l'arbre (3) est en acier.

9. Liaison d'assemblage selon l'une des revendications 5 à 8, **caractérisée en ce que** la pièce formant moyeu est en oxyde de zirconium.

10. Petit entraînement électrique comprenant un arbre (3) et, un pignon (1) relié à l'arbre (3), **caractérisé par** une liaison d'assemblage entre l'arbre (3) et le pignon (1) selon l'une des revendications 5 à 9.
